# DEMANDE DE BREVET EUROPEEN

(11) **EP 1 316 775 A1**
(43) Date de publication de la demande: **04.06.2003**
(21) Numéro de dépôt: 02356234.1
(22) Date de dépôt: 20.11.2002
(51) Int. Cl.: G01B 3/10

(54) **Mètre à ruban**

(30) Priorité: 29.11.2001 FR 0115459
(71) Demandeur: Passot Innovation, 42120 Le Coteau (FR)
(72) Inventeur: Passot, André-Louis, 42123 L'Hopital sur Rhins (FR); Passot, Philippe, 42300 Roanne (FR); Passot, Patrick, 42670 Pradines (FR); Passot, Jean-Michel, 42123 L'Hopital sur Rhins (FR); Passot, Bertrand, 42300 Roanne (FR)
(74) Mandataire: Thivillier, Patrick

(57) **Abrégé**

Un Mètre à ruban présente un ruban gradué (2) pouvant être déroulé et enroulé autour d'un tambour rotatif (16) inséré dans un boîtier (8). Le boîtier (8) comprend une ouverture (12) pour rendre visible au moins une inscription (14) tournant (D, L) simultanément avec le tambour rotatif.

## Description

Un mètre à ruban traditionnel comprend un ruban gradué, c'est-à-dire une bande en forme de lame allongée métallique qui est enroulée autour d'une bobine ou tambour rotatif. Le tambour rotatif se positionne dans un petit boîtier tenant dans la main de l'utilisateur. Le ruban gradué présente une première extrémité liée au tambour rotatif. A son deuxième extrémité libre, le ruban gradué comporte un crochet. Cette deuxième extrémité sort par une ouverture ménagée dans le boîtier, le crochet empêchant la rétractation complète du ruban à l'intérieur du boîtier.

Dans un modèle d'une conception particulièrement simple, le ruban possède lui-même des propriétés de rappel, ce qui permet de faire tourner le tambour dans le sens d'un rembobinage du ruban, lorsque ce dernier est sorti du boîtier. D'autres boîtiers de mètres à ruban comportent un ressort supplémentaire. Dans certains modèles un plus complexes, l'utilisateur peut également verrouiller ou déverrouiller la sortie et le rembobinage du ruban grâce à un système de blocage à bouton poussoir positionné à l'extérieur du boîtier.

Le mètre à ruban constitue un outil de travail simple à utiliser et se retrouvant quasiment dans toutes les corporations d'artisans, de commerçants et d'ouvriers. De plus, de très nombreuses personnes consacrent leurs loisirs à des activités de jardinage et de bricolage et emploient très souvent un mètre à ruban. Du fait de sa très grande diffusion auprès d'un très large public, le mètre à ruban peut ainsi servir à véhiculer des messages.

### Résumé de l'invention

Un premier but de l'invention est de concevoir un mètre à ruban qui soit également destiné à un usage d'information ou de publicité.

Un deuxième but consiste à élaborer une inscription pouvant facilement être apposée sur un mètre à ruban.

Un troisième but est de prévoir des moyens spécifiques pour rendre une information, une publicité, un message ou un logo visuellement particulièrement attractif lorsqu'il est positionné sur un mètre à ruban.

Un mètre à ruban présente un ruban gradué pouvant être déroulé et enroulé autour d'un tambour rotatif inséré dans un boîtier.

Conformément à l'invention, le mètre à ruban est caractérisé en ce que le boîtier comprend une ouverture pour rendre visible au moins une inscription tournant simultanément avec le tambour rotatif.

Très préférentiellement, la ou les inscriptions sont directement réalisées sur l'une ou sur les faces planes du tambour rotatif. L'inscription est favorablement réalisée sur une plaque solidarisée au tambour rotatif par trois ergots. Les trois ergots peuvent venir se loger dans trois creux correspondants qui sont ménagés sur la face plane du tambour rotatif. L'inscription est également favorablement réalisée sur une plaque solidarisée au tambour rotatif par un ancrage central. L'ancrage central peut venir se fixer sur un moyeu du tambour rotatif.

De manière particulière, l'inscription se présente sous la forme d'une plaque plane ou à reliefs, réalisée en matériau polymère. Cette plaque peut être imprimée ou non, par sérigraphie, par tampographie ou par gravure laser.

Dans un mode de réalisation intéressant, l'inscription est protégée par une fenêtre transparente, qui peut être enlevée en fonction de l'utilisation. Dans un autre mode de réalisation, le boîtier lui-même est réalisé en un matériau polymère transparent.

### Description des dessins

L'invention sera bien comprise et ses divers avantages et différentes caractéristiques ressortiront mieux lors de la description suivante, de l'exemple non limitatif de réalisation, en référence aux dessins schématiques annexés, dans lesquels :

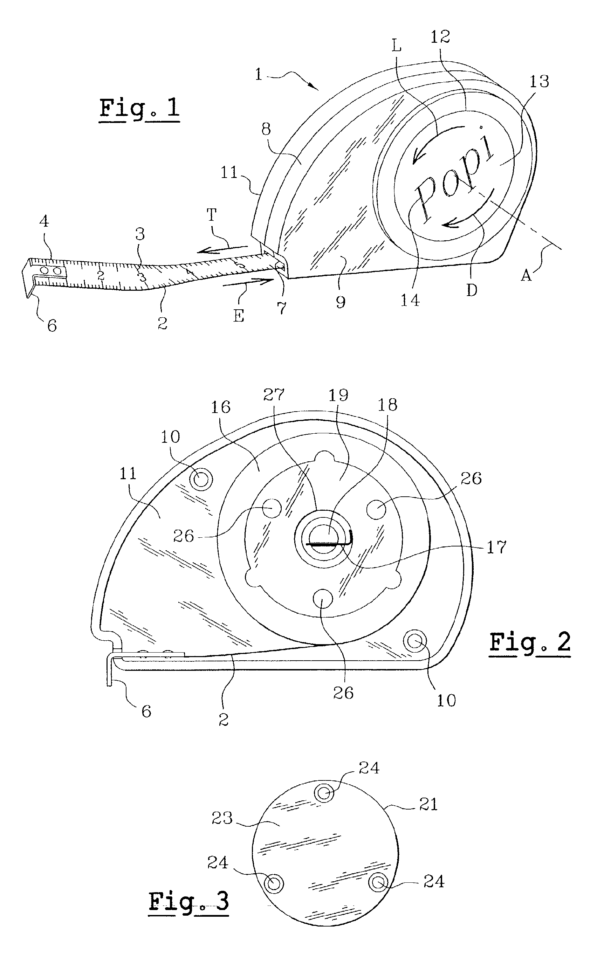

- la Figure 1 représente une vue en perspective d'un mètre à ruban selon l'invention ;
- la Figure 2 représente une vue du dessus d'un mètre à ruban sans sa partie supérieure ;
- la Figure 3 représente une vue du dessous de la plaque portant l'inscription ; et
- la Figure 4 représente un vue du dessus éclatée du mètre à ruban.

### Description détaillée

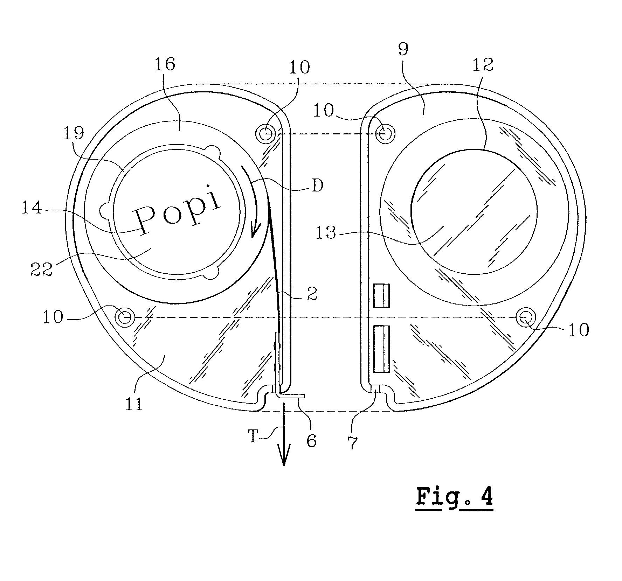

Un mètre à ruban 1 comprend un ruban 2 présentant une graduation 3. A une première extrémité libre 4 du ruban 2 est monté un crochet 6. Le ruban 2 sort par une ouverture 7 ménagée dans un boîtier 8 permettant de garder le ruban 2. Le boîtier 8 est formé de deux parties en coque, une partie supérieure formant couvercle 9 et une partie inférieure formant un fond 11. La partie supérieure formant couvercle 9 se fixe à la partie inférieure formant fond 11 (voir lignes en pointillés en Figure 4), grâce à des moyens d'encliquetage 10 sous la forme de pions et de creux correspondants.

Conformément à l'invention, dans la partie supérieure 9 du boîtier 8 est ménagé une large ouverture circulaire 12. Cette ouverture 12 est fermée par une fenêtre 13, réalisée en un matériau transparent. Un message publicitaire 14 est visible à travers cette fenêtre 13. On pourra prévoir la fenêtre 13 avec un matériau transparent et grossissant de type loupe.

Le ruban 2 vient s'enrouler autour d'une bobine ou tambour rotatif 16. Le tambour 16 vient se loger dans la partie inférieure formant un fond 11 du boîtier 8 et tourne par rapport à un axe de rotation A. Une lame formant ressort 17 est attachée au pivot de rotation 18 du tambour 16 solidaire de la partie inférieure 11 du boîtier 8. Pour ce faire, le pivot de rotation 18 est fendu en deux demi-cylindres laissant passer et coinçant la lame 17. Par son élasticité et sa solidarisation à un point fixe central, le ruban 2 avec sa lame formant ressort 17 joue ainsi le rôle d'un ressort de rappel. Le ruban 2 permet d'entraîner en rotation le tambour 16 et de se rembobiner très facilement et automatiquement lorsque son extrémité libre 4 n'est plus retenue entre les doigts de l'utilisateur.

Conformément à l'invention, le message publicitaire 14 tourne en même temps et à la même vitesse que le tambour rotatif 16, c'est-à-dire en même temps que le ruban 2 se déroule ou s'enroule. Pour obtenir cet effet attractif, l'une des faces circulaires planes ou flasque 19 du tambour 16 comprend une plaque 21. Cette plaque 21 porte le message publicitaire 14 sur l'une de ses faces planes 22. Le message publicitaire 14 est positionné en face de l'ouverture 12 et la fenêtre 13 de la partie supérieure 9 du boîtier 8.

Le message publicitaire 14 est réalisé sur la face plane 22 de la plaque 21 par impression sérigraphique, qui est un système de passage de l'encre à travers un écran de soie ou de nylon préalablement dessiné en fonction des textes, images et logos souhaités.

Le message publicitaire 14 peut également être réalisé sur la face plane 22 de la plaque 21 par tampographie, qui est un système de report de l'encre par l'utilisation d'une plaque en creux venant conserver l'encre dans la forme souhaitée, un tampon venant ensuite prélever cette encre pour la déposer sur l'article à marquer.

Le message publicitaire 14 peut également être réalisé sur la face plane 22 de la plaque 21 par gravure laser. D'autres procédés d'impression pourront être utilisés.

Le message publicitaire 14 peut également être réalisé par dépôt d'un autocollant sur la face plane 19 du tambour 16.

Le message publicitaire 14 peut également être réalisé en trois dimensions sur la plaque 21. La forme du matériau polymère est alors elle-même personnalisée par moulage. Dans ce cas de perception 3D, la fenêtre 13 est enlevée, ce qui permet à l'utilisateur de toucher directement le message publicitaire rotatif 14.

L'autre face plane circulaire 23 de la plaque 21 comprend trois ergots 24. Ces trois ergots 24 sont destinés à coopérer par encliquetage avec trois creux 26 correspondants ménagés dans la face circulaire plane 19 du tambour 16, permettant ainsi une fixation de la plaque 21 contre la face plane 19 du tambour 16.

Dans un autre mode de fixation (non représenté) de la plaque 21 contre la face plane 19 du tambour 16, un ancrage central, de type collerette, vient se fixer sur le moyeu central 27 du tambour rotatif 16. Cette solution permet d'avoir une forme quelconque (carrée, ovale) pour la plaque 21, uniquement rattachée en un point et qui soit ainsi indépendante du système de fixation.

Lorsque l'utilisateur va faire sortir du ruban gradué 2 en tirant (selon la flèche T) sur la première extrémité libre 4 munie de son crochet 6, le tambour 16 va tourner dans un sens (flèche D), de façon à dévider le ruban 2. Le message publicitaire 14 va tourner dans le même sens (flèche D) conjointement avec le tambour 16 et par rapport à l'axe de rotation A du tambour 16.

Lorsque l'utilisateur va lâcher le ruban gradué 2, celui-ci va automatiquement rentrer (selon la flèche E) dans le boîtier 8 et le tambour 16 va tourner en sens contraire de façon à rembobiner le ruban 2. Le message publicitaire 14 va tourner en sens inverse (flèche L) conjointement avec le tambour 16 et par rapport à l'axe de rotation A du tambour 16.

La présente invention n'est pas limitée aux modes de réalisation décrits et illustrés. De nombreuses modifications peuvent être réalisées, sans pour autant sortir du cadre défini par la portée du jeu de revendications.

La forme, les couleurs et les dimensions du boîtier 8 avec son ouverture 12 et sa fenêtre 13 pourront être extrêmement variables. La forme, les couleurs et les dimensions de l'inscription 14 pourront être extrêmement variables.

## Revendications

1. Mètre à ruban présentant un ruban gradué (2) pouvant être déroulé et enroulé autour d'un tambour rotatif (16) inséré dans un boîtier (8), **caractérisé en ce que** le boîtier (8) comprend une ouverture (12) pour rendre visible au moins une inscription (14) tournant (D, L) simultanément avec le tambour rotatif.

2. Mètre à ruban selon la revendication 1, **caractérisé en ce que** la ou les inscriptions (14) sont directement réalisées sur l'une ou sur les faces planes (19) du tambour rotatif (16).

3. Mètre à ruban selon la revendication 1 ou 2, **caractérisé en ce que** l'inscription (14) est réalisée sur une plaque (21) solidarisée au tambour rotatif (16) par trois ergots (24) venant se loger dans trois creux correspondants (26) ménagés sur la face plane (19) du tambour rotatif(16).

4. Mètre à ruban selon la revendication 1 ou 2, **caractérisé en ce que** l'inscription (14) est réalisée sur une plaque solidarisée au tambour rotatif (16) par un ancrage central venant se fixer sur un moyeu (27) du tambour rotatif (16).

5. Mètre à ruban selon la revendication 3 ou 4, **caractérisé en ce que** l'inscription (14) se présente sous la forme d'une plaque (21) plane ou à reliefs, réalisée en matériau polymère.

6. Mètre à ruban selon la revendication 5, **caractérisé en ce que** la plaque (21) est imprimée par sérigraphie, par tampographie ou par gravure laser.

7. Mètre à ruban selon l'une des revendications précédentes, **caractérisé en ce que** l'inscription (14) est protégée par une fenêtre transparente (13).

8. Mètre à ruban selon l'une des revendications précédentes, **caractérisé en ce que** le boîtier (8) est réalisé en un matériau polymère transparent.
